# EUROPÄISCHE PATENTANMELDUNG

(11) **EP 0 608 735 A2**
(43) Veröffentlichungstag der Anmeldung: **03.08.1994**
(21) Anmeldenummer: 94100552.2
(22) Anmeldetag: 15.01.1994
(51) Int. Cl.: B60K 28/00, B60K 28/14

(54) **Fahrzeug mit einem Verriegelungskreis**

(30) Priorität: 25.01.1993 US 7431
(71) Anmelder: DEERE & COMPANY, Moline, Illinois 61265 (US)
(72) Erfinder: Peterson, Rudolph Andrew, Jr., Horicon, Wisconsin 53032 (US)
(74) Vertreter: Feldmann, Bernhard

(57) **Zusammenfassung**

Bei einem Fahrzeug mit einem Motor, einem zwischen einer Schaltstellung für Vorwärtsfahrt und einer Schaltstellung für Rückwärtsfahrt verstellbaren Getriebe, einer Kupplung zum Ein- und Ausrücken einer Vorrichtung zur Übertragung von Drehkraft vom Motor zum Antrieb eines Gerätes und mit einem Zündstromkreis, der einen Zündrelaisschalter, einen der Kupplung zugeordneten Zapfwellenschalter (60), einen Zapfwellenrelaisschalter und einen weiteren Schalter aufweist, der in seiner Offenstellung die Verbindung zu dem Zapfwellenschalter (60) unterbricht, ist der weitere Schalter als ein normalerweise geschlossener und auf ein Hindernis ansprechender Tastschalter (26) ausgebildet, der in seiner Offenstellung einen eingeschalteten Geräteantrieb abstellt. Es ist ferner vorgesehen, daß in einer bestimmten Schaltstellung des Getriebes, insbesondere in der Stellung für Rückwärtsfahrt, bei einem Orten eines Hindernisses oder bei einem Auftreffen auf ein Hindernis die Zündung des Verbrennungsmotors abgestellt wird, aber wieder angestellt werden kann, bevor das Fahrzeug vollständig zum Stillstand kommt, d. h. solange, wie der Motor noch umläuft.

## Beschreibung

Die Erfindung bezieht sich auf ein Fahrzeug mit einem Motor, einem zwischen einer Schaltstellung für Vorwärtsfahrt und einer Schaltstellung für Rückwärtsfahrt verstellbaren Getriebe, einer Kupplung zum Ein- und Ausrücken einer Vorrichtung zur Übertragung von Drehkraft vom Motor zum Antrieb eines Gerätes und mit einem Zündstromkreis, der einen Zündrelaisschalter, einen der Kupplung zugeordneten Zapfwellenschalter, einen Zapfwellenrelaisschalter und einen weiteren Schalter aufweist, der in seiner Offenstellung die Verbindung zu dem Zapfwellenschalter unterbricht.

Derartige Fahrzeuge (US-A-4 317 500) weisen einen Starterstromkreis und einen Zündstromkreis auf, wobei die Vorrichtung zur Übertragung von Drehkraft als Zapfwelle ausgebildet ist, die einen mit dem als Rasentraktor ausgebildeten Fahrzeug verbundenen Mäher bzw. dessen Messer antreibt. Solche Rasentraktoren sind mit den verschiedensten Sicherheitsvorkehrungen versehen. So können sie zum Beispiel nicht angelassen werden, wenn der Zapfwellenantrieb eingeschaltet ist oder das Getriebe sich nicht in seiner Neutralstellung befindet. Gleichfalls weisen sie einen Anwesenheitsschalter in Form eines Sitzschalters auf, der offen ist, wenn eine Bedienungsperson sich nicht auf dem Sitz befindet oder, was bei Kindern leicht vorkommt, eine falsche Sitzposition einnimmt. Öffnet sich der Sitzschalter, beispielsweise bei einem Verlassen des Sitzes, so unterbricht der Sitzschalter den Zündstromkreis bzw. die Verbindung zu den Zündkerzen und die Zündung des Verbrennungsmotors wird automatisch abgeschaltet. Auch bei einer Unterbrechung der Zündung kann der Motor noch für eine kurze Zeitspanne umlaufen, insbesondere wenn sich die Zündung während der Fahrt ausschaltet, so daß dann auch noch das oder die Messer des Rasenmähers umlaufen, was aber bei dem eingangs genannten Fahrzeug dadurch vermieden wird, daß beim Öffnen des Sitzschalters auch der Zapfwellenschalter geöffnet wird.

Es ist auch nicht mehr neu (US-A-4 337 841), im Bereich einer Zapfwelle einen Antennenschalter vorzusehen, der so empfindlich ist, daß er bei einer Berührung mit Kleidungsstücken zum Beispiel den Fahrzeugmotor ausstellt.

In dem Dokument (US-A-4 964 485) ist am Heck eines Personenkraftwagens ein Schalter offenbart, der bei Rückwärtsfahrt den Fahrzeugmotor abstellt, wenn der Schalter auf ein Hindernis trifft.

Rasentraktoren (Cub Cadet, Modell 1325 und 1330) sind bereits mit einem Verriegelungssystem ausgerüstet worden, das eine Zapfwelle automatisch abschaltet, wenn das Fahrzeug in eine Schaltstellung für Rückwärtsfahrt geschaltet wird.

Die mit der Erfindung zu lösende Aufgabe wird darin gesehen, ein Fahrzeug mit einem Sicherheitsschalter zu versehen, der bei einem Auftreffen auf ein Hindernis oder beim Orten eines Hindernisses anspricht und in einem solchen Fall ein Ausschalten eines angetriebenen Gerätes und grundsätzlich ein Abstellen des Motors bewirken soll. Nach einem ersten Aspekt der Erfindung ist deshalb vorgesehen, daß der weitere Schalter als ein nomalerweise geschlossener und auf ein Hindernis ansprechender Tastschalter ausgebildet ist und daß ein Fahrtrichtungsschalter vorhanden ist, der in einer Schaltstellung des Getriebes offen und sonst geschlossen ist, wobei die Verdrahtung derart ist, daß bei sich in ihren Schließstellungen befindlichen Zapfwellen- und Fahrtrichtungsschalter und geöffneten Tastschalter der Zündrelaisschalter geschlossen ist. Bei einer Hindernisortung oder bei einem Auftreffen des Tastschalters auf ein Hindernis öffnet sich dieser sofort und unterbricht die stromführende Verbindung zu dem Zapfwellenschalter, so das der Antrieb zu dem Gerät sofort unterbrochen wird. Befindet sich der Fahrtrichtungsschalter in einem solchen Fall in seiner Schließstellung, die er einnehmen kann, wenn das Fahrzeug entweder vorwärts oder rückwärts fährt, so wird dann die Zündung nicht unterbrochen und das Fahrzeug fährt weiter. Befindet sich dagegen der Fahrtrichtungsschalter in seiner Offenstellung, so wird in einem solchen Fall der Zündstromkreis durch Öffnen des Zündrelaisschalters unterbrochen, aber sofort wieder geschlossen, wenn die Bedienungsperson das Getriebe in eine Stellung verstellt, in der der Fahrtrichtungsschalter wieder geschlossen ist. Geschieht dies in der Zeitspanne, in der der Motor noch umläuft, dann springt der Motor wieder an und das Fahrzeug fährt in entgegengesetzter Richtung von dem Hindernis fort. Ein lästiges Neuanlassen des Motors über den Starterstromkreis wird dadurch vermieden. Wird andererseits die Zeitspanne, in der der Motor bei abgeschalteter Zündung noch umläuft, nicht genutzt, so kommt das Fahrzeug bei abgestelltem Motor und ausgeschaltetem Antrieb für das Gerät zum Stillstand.

Nach einem anderen Aspekt der Erfindung ist ein Wiederanlassen des Fahrzeuges ebenfalls dadurch möglich, daß der weitere Schalter als ein normalerweise geschlossener und auf ein Hindernis ansprechender Tastschalter ausgebildet und mit dem Zapfwellenschalter derart verdrahtet ist, daß bei sich in ihren Offenstellungen befindlichen Zapfwellen- und Tastschalter der Zündrelaisschalter geschlossen ist. Wird nun der Tastschalter bei angetriebenem Gerät durch ein Hindernis geöffnet, so wird wiederum der Zündstrom und der Antrieb zu dem Gerät unterbrochen. Bevor aber das Fahrzeug vollständig zum Stillstand kommt, hat die Bedienungsperson die Möglichkeit, den Zündkreis durch Verstellen des Zapfwellenschalters in seine Offenstellung, in der der Stromkreis zu der das Gerät einschaltenden Kupplung unterbrochen ist, wieder zu schließen, so daß der Verbrennungsmotor wieder anspringt und das Fahrzeug bei abgeschaltetem Gerät in derselben Fahrtrichtung weiterfahren kann.

Ein Wiederanspringen des Motors ist bei eingeschaltetem Antrieb für das Gerät aber nicht möglich, da die Erfindung ferner vorsieht, daß bei sich in ihren Offenstellungen befindlichen Fahrtrichtungs- und Tastschalter der Zündrelaisschalter bei geschlossenem Zapfwellenschalter in seine Offenstellung verstellt wird. In einem solchen Fall kann das Fahrzeug nur dadurch wieder in Betrieb gesetzt werden, daß der Starterstromkreis erneut betätigt wird.

Tastschalter sind derart ausgebildet, daß sie selbsttätig in ihre Ausgangslage zurückkehren, wenn die Betätigungskraft nicht mehr einwirkt. Andererseits ist es denkbar, daß der Tastschalter nach Überwindung des Hindernisses aus irgendeinem Grund nicht in seine der Schließstellung entsprechende Ausgangslage zurückehrt, weshalb nach der Erfindung weiter vorgesehen ist, daß der Tastschalter mit dem Zapfwellenschalter derart verdrahtet ist, daß bei sich in seiner Offenstellung befindlichem Tastschalter und sich in seiner Schließstellung befindlichem Zapfwellenschalter der Stromkreis zur Kupplung nicht schließbar ist. Bei einer möglichen Beschädigung des Tastschalters ist damit der Antrieb für das Gerät nicht mehr zuschaltbar. Ist andererseits der Tastschalter wieder betriebsbereit, so läßt sich der Geräteantrieb nur zuschalten, wenn zunächst der Zapfwellenschalter in seine Offenstellung und danach in seine Schließstellung verstellt wurde.

Im einzelnen sieht die Erfindung schließlich vor, daß an den Ausgang des Zündrelaisschalters ein Zapfwellenrelaisschalter und der Tastschalter hintereinander angeschlossen sind, wobei der Zapfwellenschalter als Doppelschalter ausgebildet ist, dessen erster Schalter in der Schließstellung eine Verbindung zu der Kupplung schließt und dessen zweiter Schalter in der Offenstellung eine Verbindung zu dem Relais des Zapfwellenrelaisschalters schließt, und wobei der erste Schalter des Zapfwellenschalters mit dem Eingang des Tastschalters und der Ausgang des Tastschalters mit dem Eingang des Relais des Zapfwellenrelaisschalters verbunden ist. Auf diese Weise sind der Zündrelaisschalter, der Zapfwellenrelaisschalter und der Tastschalter zueinander in Reihe geschaltet, wobei das Relais des Zapfwellenrelaisschalters bei sich in seiner Offenstellung befindlichem Zapfwellenschalter erregt werden kann, so daß der Zapfwellenrelaisschalter schließt. Sind alle in Reihe geschalteten Schalter geschlossen, so entsteht infolge der Verbindung des Ausgangs des Tastschalters mit der Relaisspule des Zapfwellenrelaisschalters eine Halteschleife, die dann den Zapfwellenrelaisschalter geschlossen hält, wenn der Zapfwellenschalter zum Einrücken des Geräteantriebes in seine Schließstellung verstellt wird. Damit aber der Fahrzeugmotor bei einem geöffneten Tastschalter kurzfristig wieder anspringen kann, ist noch der Ausgang des zweiten Schalters des Zapfwellenschalters mit dem Eingang des Relais des Zündrelaisschalters verbunden.

Bekanntlich weisen Zündstromkreise einen Zündschalter auf, und die Verdrahtung sieht deshalb außerdem vor, daß der Ausgang des Zündschalters mit dem Eingang des zweiten Schalters des Zapfwellenschalters, mit dem Eingang des Zündrelaisschalters und mit dem Eingang des Relais des Zündrelaisschalters verbunden ist, wobei in der letztgenannten Verbindung der Fahrtrichtungsschalter vorgesehen ist, der in der Schaltstellung des Getriebes für Rückwärtsfahrt offen ist.

Damit aber bei angetriebenem Gerät und geöffnetem Fahtrichtungsschalter ein Fahrbetrieb möglich ist, wenn der Tastschalter geschlossen ist, kann in einfacher Weise noch der Ausgang des Tastschalters mit dem Eingang des Relais des Zündrelaisschalters verbunden sein.

Schließlich kann in der Verbindung des Ausgangs des zweiten Schalters des Zapfwellenschalters mit dem Eingang des Relais des Zapfwellenrelaisschalters und in der Verbindung des Ausgangs des Tastschalters mit dem Eingang der Spule des Zapfwellenrelaisschalters je eine Diode vorgesehen sein.

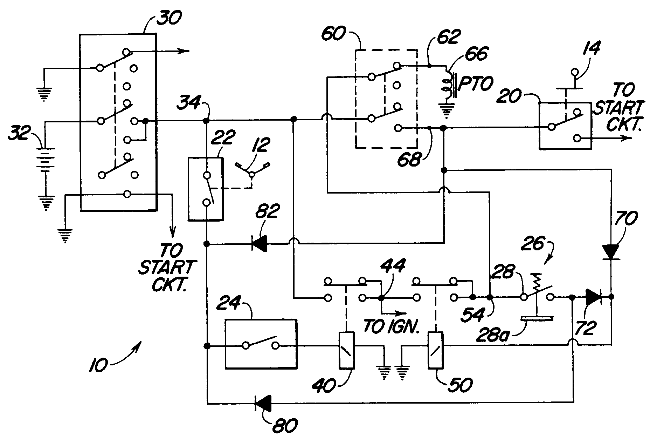

Die einzige Figur der Zeichnung zeigt ein nachfolgend näher beschriebenes Ausführungsbeispiel der Erfindung.

In dieser Figur ist ein Verriegelungskreis für ein mit einer Zapfwelle ausgestattetes Fahrzeug schematisch dargestellt.

Der Verriegelungskreis ist dort mit 10 bezeichnet, wobei das Fahrzeug ein in der Garten- und Grundstückspflege einsetzbarer Rasentraktor sein kann. Dieser ist mit einem Getriebe ausgerüstet, das eine Richtungssteuerung 12, über die das Fahrzeug je nach Einstellung vorwärts oder rückwärts gefahren werden kann, und einen Gangschalthebel 14 aufweist, der außer der Neutralstellung verschiedene Schaltstellungen einnehmen kann, damit das Fahrzeug in mehreren Gängen gefahren werden kann. Dem Gangschalthebel 14 ist ein Getriebeschalter 20 zugeordnet, der geschlossen ist, wenn das Getriebe seine Neutralstellung einnimmt, und offen ist, wenn das Getriebe eine Schaltstellung einnimmt, und der Richtungssteuerung 12 ist ein Fahrtrichtungsschalter 22 zugeordnet, der geschlossen ist, wenn das Getriebe seine Neutralstellung oder eine Schaltstellung für Vorwärtsfahrt einnimmt, und offen ist, wenn das Getriebe eine Schaltstellung für Rückwärtsfahrt einnimmt.

Außerdem weist der Verriegelungskreis 10 noch einen Anwesenheitsschalter 24 auf, der als Sitzschalter ausgebildet sein kann, in jedem Fall auf dem Bedienungsstand des Fahrzeuges vorgesehen ist und nur schließt, wenn eine Bedienungsperson für das Fahrzeug sich ordnungsgemäß auf dem Bedienungsstand befindet. Ferner ist noch ein Tast- oder Fühlsensor 26 vorgesehen, der einen normalerweise geschlossenen Schalter 28 und einen Betätiger 28a aufweist. Der Sensor 26 spricht an oder der Schalter 28 wird geöffnet, sobald der Betätiger 28a ein Hindernis an bzw. auf dem Boden ermittelt oder mit diesem Kontakt hat. Der Betätiger 28a kann in einfacher Weise als eine unter Federwirkung stehende Stange oder ähnliche Vorrichtung ausgebildet sein, die im Bereich des rückwärtigen Endes des Fahrzeuges vorgesehen ist.

Zu dem Kreis 10 gehört ferner ein herkömmlicher Zündschalter 30, der einerseits mit einer Kraftquelle 32, beispielsweise einer Batterie am Fahrzeug, und andererseits mit einer Schalterausgangsklemme 34 verdrahtet ist. Die Klemme 34 ist an die positive Klemme der Kraftquelle 32 angeschlossen, wenn sich der Zündschalter 30 in seiner Start- oder Laufstellung befindet.

Ein Zündrelais 40 weist eine mit der Klemme 34 verbindbare Eingangsklemme und eine Ausgangsklemme 44 auf, die mit der Motorzündung des Fahrzeuges derart verbunden ist, daß eine stromführende Verbindung zwischen der Fahrzeugzündung und der Klemme 34 bei sich nicht in seiner Ausstellung befindlichem Zündschalter 30 entsteht, sobald das Zündrelais 40 auferregt wurde. Diese Verbindung wird jedoch sofort unterbrochen und der Verbrennungsmotor abgestellt, wenn das Zündrelais 40 nicht mehr erregt ist. Die Spule des Relais 40 ist über den Anwesenheitsschalter 24 und dem zu diesen in Reihe geschalteten Fahrtrichtungsschalter 22 an die Klemme 34 angeschlossen.

Schließlich sind noch ein Zapfwellenrelais 50 und ein Zapfwellenschalter 60 vorgesehen. Das Zapfwellenrelais 50 ist mit seiner Eingangsklemme an die Ausgangsklemme 44 anschließbar, und seine Ausgangsklemme 54 ist mit dem Sensorschalter 28 verbunden. Die Ausgangsklemme 54 des Zapfwellenrelais 50 ist außerdem noch mit einer von zwei Eingangsklemmen des Zapfwellenschalters 60 verbunden. Letzterer hat ebenfalls zwei Ausgangsklemmen, von denen die eine Klemme 62 an eine elektrische Kupplung 66 für die Zapfwelle angeschlossen ist. Die Kupplung 66 bewirkt den Zapfwellenantrieb, wenn die Ausgangsklemme 54 stromführend ist und wenn sich der Zapfwellenschalter 60 in seiner oberen An- oder Schließstellung befindet. Die zweite Eingangsklemme des Zapfwellenschalters 60 ist an die Ausgangsklemme 34 angeschlossen und die entsprechende zweite Ausgangsklemme 68 des Zapfwellenschalters 60 ist über den Getriebeschalter 20 an einen Starterkreis derart angeschlossen, daß der Verbrennungsmotor nur angelassen werden kann, wenn sich das Getriebe in seiner Neutralstellung und der Zapfwellenschalter 60 in seiner unteren Ausstellung befindet, die in den Ansprüchen als Offenstellung bezeichnet ist.

Die Ausgangsklemme 68 des Zapfwellenschalters 60 ist über eine Diode 70 noch mit der Spule des Zapfwellenrelais 50 verbunden, um das Zapfwellenrelais 50 anfänglich aktivieren zu können, wenn sich der Zapfwellenschalter 60 in seiner Ausstellung befindet. Eine zu einer Halteschleife gehörende Diode 72 ist noch zwischen der Ausgangsklemme des Sensorschalters 28 und der Spule des Zapfwellenrelais 50 vorgesehen und dient dazu, das Zapfwellenrelais 50 in einem auferregten Zustand auch dann zu halten, wenn nach einem Verstellen des Zapfwellenschalters 60 in seine Anstellung die Verbindung zwischen der Ausgangsklemme 34 und der Ausgangsklemme 68 unterbrochen wurde unter der Voraussetzung, daß der Sensorschalter 28 in seiner geschlossenen Stellung verbleibt (keine Ortung eines Hindernisses).

Desweiteren ist die Ausgangsklemme des Sensorschalters 28 noch über eine Diode 80 mit dem Eingang des Anwesenheitsschalters 24 verbunden und ermöglicht dadurch eine stromführende Verbindung zu der Spule des Zündrelais 40, wenn der Fahrtrichtungsschalter 22 offen ist (das Fahrzeuggetriebe befindet sich in einer Schaltstellung für Rückwärtsfahrt), der Zapfwellenschalter 60 sich in seiner Anstellung befindet, der Sensorschalter 28 geschlossen ist (keine Ortung eines Hindernisses) und wenn der Anwesenheitsschalter 24 geschlossen ist (eine Bedienungsperson befindet sich an dem vorgegebenen Platz auf dem Bedienungsstand).

Eine zweite Haltediode 82 ist noch in einer Verbindung zwischen der zweiten Augangsklemme 68 des Zapfwellenschalters 60 und dem Eingang des Anwesenheitsschalters 24 vorgesehen, um noch eine normale Motorfunktion aufrechterhalten zu können, wenn der Anwesenheitsschalter 24 geschlossen ist, wenn der Zapfwellenschalter 60 sich in seiner Ausstellung befindet (die Ausgangsklemme 68 ist stromführend) und wenn sich das Getriebe in einer Schaltstellung für Rückwärtsfahrt befindet (der Fahrtrichtungsschalter 22 ist offen), wobei es nicht darauf ankommt, in welchem Zustand sich der Sensorschalter 28 oder das Zapfwellenrelais 50 befinden.

Um nun den Motor starten zu können, muß sich das Getriebe in seiner Neutralstellung bzw. in einer Parkstellung befinden, in der der Getriebeschalter 20 und der Fahrtrichtungsschalter 22 geschlossen sind. Danach ist der Zapfwellenschalter 60 in seine Ausstellung zu verstellen, sofern er sich nicht bereits in dieser Stellung befindet, so daß eine geschlossene Verbindung zwischen der Ausgangsklemme 34 des Zündschalters 30 und dem Starterkreis bei sich in Neutralstellung befindlichem Getriebe entsteht. Anschließend wird der Zündschalter 30 in seine Startposition verstellt, in der die Klemme 34 mit der positiven Klemme an der Kraftquelle verbunden ist und eine stromführende Verbindung zu der Spule des Zündrelais 40 entsteht. Das Zündrelais zieht an und die Zündung ist mit der Kraftquelle 32 verbunden, so daß der Motor anspringen kann. Ist dies erfolgt, wird der Zündschalter 30 durch Loslassen des Zündschlüssels in seine Laufstellung verstellt, in der die Klemme 34 immer noch mit der Kraftquelle 32 verbunden ist. Bei sich in seiner Ausstellung befindlichem Zapfwellenschalter 60 wird auch die Spule des Zapfwellenrelais 50 erregt, da die Verbindung zwischen der Klemme 68 und dem Eingang zur Spule über die Diode 70 stromführend ist. Dadurch wird die Verbindung zwischen den Klemmen 44 und 54 über den Relaisschalter geschlossen und es entsteht unter der Voraussetzung, daß der Sensorschalter 28 geschlossen ist (keine Ortung eines Hindernisses) eine Halteschleife zu der Spule des Zapfwellenrelais 50 und eine stromführende Verbindung zu der oberen Eingangsklemme des Zapfwellenschalters 60. Dieser bewirkt dann über die Kupplung 66 einen Zapfwellenantrieb, wenn er in seine in der Zeichnung dargestellte Anstellung verstellt wird.

Wenn der Fahrtrichtungsschalter 22 geschlossen ist, was bei Neutralstellung des Getriebes oder bei einer Schaltstellung für Vorwärtsfahrt der Fall ist, wird die Spule des Zündrelais 40 erregt, sofern auch der Anwesenheitsschalter 24 geschlossen ist. Wird jedoch das Getriebe in eine Schaltstellung für Rückwärtsfahrt verstellt, öffnet der Fahrtrichtungsschalter 22 und die Spule des Zündrelais 40 bleibt dennoch erregt, da noch die Verbindung über die Diode 80 besteht, sofern der Schalter 28 (keine Ortung eines Hindernisses) und der Anwesenheitsschalter 24 geschlossen bleiben. Sobald aber ein Hindernis geortet wird, während sich das Getriebe in einer Schaltstellung für Rückwärtsfahrt bei eingerückter Zapfwelle befindet, wird das Zündrelais 40 deaktiviert und damit die Zündung zum Verbrennungsmotor ausgestellt, wodurch auch das Zapfwellenrelais 50 deaktiviert wird. Kommt der Verbrennungsmotor und damit auch das Fahrzeug zu einem Stillstand, dann muß zu einem erneuten Starten des Motors der Zapfwellenschalter 60 erst in seine Ausstellung und der Gangschalthebel 14 in seine Neutralstellung verstellt werden. Danach kann Strom über die Diode 70 zu der Spule des Zapfwellenrelais und über die Diode 82 oder den geschlossenen Fahrtrichtungsschalter 22 zu der Spule des Zündrelais 40 gelangen. Wird nun der Zapfwellenschalter 60 wieder in seine Anstellung verstellt, so bleibt die Spule des Zapfwellenrelais erregt, sofern kein Hindernis geortet wird und der Schalter 28 geschlossen ist.

Kommt andererseits bei einer Schaltstellung des Getriebes für Rückwärtsfahrt bei eingeschalteter Zapfwelle und bei einer Ortung eines Hindernisses das Fahrzeug nicht sofort zu einem Stillstand oder läuft das Schwungrad des Verbrennungsmotors noch für eine kurze Zeitspanne um, dann kann ein erneutes Starten dadurch vermieden werden, daß das Getriebe aus seiner Schaltstellung für Rückwärtsfahrt geschaltet wird oder daß der Zapfwellenschalter in seine Ausstellung verstellt wird. Dadurch wird die Spule 40 wieder stromführend, der Schalter des Zündrelais schließt wieder und die Zündung setzt zum erneuten Anlassens des Motors wieder ein. Geht aber nach Überwindung des Hindernisses der Tastschalter 26 aus irgendeinem Grunde nicht in seine Betriebsstellung zurück, so verhindert der Kreislauf auch bei Vorwärtsfahrt, daß die Zapfwelle wieder eingerückt werden kann. Geht aber der Tastschalter in seine Betriebsstellung zurück, so kann die Zapfwelle nur betrieben werden, indem der Zapfwellenschalter 60 zunächst in seine Ausstellung und danach in seine Anstellung verstellt wird.

## Patentansprüche

1. Fahrzeug mit einem Motor, einem zwischen einer Schaltstellung für Vorwärtsfahrt und einer Schaltstellung für Rückwärtsfahrt verstellbaren Getriebe, einer Kupplung zum Ein- und Ausrücken einer Vorrichtung zur Übertragung von Drehkraft vom Motor zum Antrieb eines Gerätes und mit einem Zündstromkreis, der einen Zündrelaisschalter, einen der Kupplung zugeordneten Zapfwellenschalter (60), einen Zapfwellenrelaisschalter und einen weiteren Schalter aufweist, der in seiner Offenstellung die Verbindung zu dem Zapfwellenschalter (60) unterbricht, dadurch gekennzeichnet, daß der weitere Schalter als ein normalerweise geschlossener und auf ein Hindernis ansprechender Tastschalter (26) ausgebildet ist und daß ein Fahrtrichtungsschalter (22) vorgesehen ist, der in einer Schaltstellung des Getriebes offen und sonst geschlossen ist, wobei die Verdrahtung derart ist, daß bei sich in ihren Schließstellungen befindlichen Zapfwellen- und Fahrtrichtungsschalter (60, 22) und geöffnetem Tastschalter (26) der Zündrelaisschalter geschlossen ist.

2. Fahrzeug mit einem Motor, einem zwischen einer Schaltstellung für Vorwärtsfahrt und einer Schaltstellung für Rückwärtsfahrt verstellbaren Getriebe, einer Kupplung zum Ein- und Ausrücken einer Vorrichtung zur Übertragung von Drehkraft vom Motor zum Antrieb eines Gerätes und mit einem Zündstromkreis, der einen Zündrelaisschalter, einen der Kupplung zugeordneten Zapfwellenschalter (60), einen Zapfwellenrelaisschalter und einen weiteren Schalter aufweist, der in seiner Offenstellung die Verbindung zu dem Zapfwellenschalter (60) unterbricht, dadurch gekennzeichnet, daß der weitere Schalter als ein normalerweise geschlossener und auf ein Hindernis ansprechender Tastschalter (26) ausgebildet ist und mit dem Zapfwellenschalter (60) derart verdrahtet ist, daß bei sich in ihren Offenstellungen befindlichen Zapfwellen- und Tastschalter (60, 26) der Zündrelaisschalter geschlossen ist.

3. Fahrzeug nach Anspruch 1 und 2, dadurch gekennzeichnet, daß bei sich in ihren Offenstellungen befindlichen Fahrtrichtungs- und Tastschalter (22, 26) der Zündrelaisschalter bei geschlossenem Zapfwellenschalter (60) in seine Offenstellung verstellt wird.

4. Fahrzeug nach einem oder mehreren der vorherigen Ansprüche, dadurch gekennzeichnet, daß der Tastschalter (26) mit dem Zapfwellenschalter (60) derart verdrahtet ist, daß bei sich in seiner Offenstellung befindlichem Tastschalter (26) und sich in seiner Schließstellung befindlichem Zapfwellenschalter (60) der Stromkreis zur Kupplung nicht schließbar ist.

5. Fahrzeug nach einem oder mehreren der vorherigen Ansprüche, dadurch gekennzeichnet, daß an den Ausgang des Zündrelaisschalters ein Zapfwellenrelaisschalter und der Tastschalter (26) hintereinander angeschlossen sind, wobei der Zapfwellenschalter (60) als Doppelschalter ausgebildet ist, dessen erster Schalter in der Schließstellung eine Verbindung zu der Kupplung schließt und dessen zweiter Schalter in der Offenstellung eine Verbindung zu dem Relais (50) des Zapfwellenrelaisschalters schließt, und wobei der erste Schalter des Zapfwellenschalters (60) mit dem Eingang des Tastschalters (26) und der Ausgang des Tastschalters (26) mit dem Eingang des Relais des Zapfwellenrelaisschalters verbunden ist.

6. Fahrzeug nach Anspruch 5, dadurch gekennzeichnet, daß der Ausgang des zweiten Schalters des Zapfwellenschalters (60) mit dem Eingang des Relais des Zündrelaisschalters verbunden ist.

7. Fahrzeug nach einem oder mehreren der vorherigen Ansprüche, wobei der Zündstromkreis einen Zündschalter (30) aufweist, dadurch gekennzeichnet, daß der Ausgang des Zündschalters (30) mit dem Eingang des zweiten Schalters des Zapfwellenschalters (60), mit dem Eingang des Zündrelaisschalters und mit dem Eingang des Relais des Zündrelaisschalters verbunden ist, wobei in der letztgenannten Verbindung der Fahrtrichtungsschalter (22) vorgesehen ist, der in der Schaltstellung des Getriebes für Rückwärtsfahrt offen ist.

8. Fahrzeug nach einem oder mehreren der vorherigen Ansprüche, dadurch gekennzeichnet, daß der Ausgang des Tastschalters mit dem Eingang des Relais des Zündrelaisschalters verbunden ist.

9. Fahrzeug nach Anspruch 5, dadurch gekennzeichnet, daß in der Verbindung des Ausgangs des zweiten Schalters des Zapfwellenschalters (60) mit dem Eingang des Relais des Zapfwellenrelaisschalters und in der Verbindung des Ausgangs des Tastschalters (26) mit dem Eingang der Spule des Zapfwellenrelaisschalters je eine Diode (70, 72) vorgesehen ist.
